# EUROPÄISCHE PATENTSCHRIFT

(11) **EP 4 013 650 B1**
(45) Veröffentlichungstag und Bekanntmachung des Hinweises auf die Patenterteilung: **09.07.2025**
(21) Anmeldenummer: 20730010.4
(22) Anmeldetag: 29.05.2020
(51) Int. Cl.: B60S 1/38, B60S 1/40

(54) **SCHEIBENWISCHERVORRICHTUNG UND SCHEIBENWISCHER MIT EINER SCHEIBENWISCHERVORRICHTUNG**
WINDSCREEN WIPER DEVICE AND WINDSCREEN WIPER HAVING A WINDSCREEN WIPER DEVICE
DISPOSITIF D'ESSUIE-GLACE ET ESSUIE-GLACE DOTÉ D'UN DISPOSITIF D'ESSUIE-GLACE

(30) Priorität: 15.08.2019 DE 102019212251
(43) Veröffentlichungstag der Anmeldung: 22.06.2022
(73) Patentinhaber: Robert Bosch GmbH, 70442 Stuttgart (DE)
(72) Erfinder: RAPP, Harald, 77815 Buehl (DE); MAERKLE, Jens, 77815 Buehl (DE)
(86) Internationale Anmeldenummer: PCT/EP2020/064961
(87) Internationale Veröffentlichungsnummer: WO 2021/028089

(56) Entgegenhaltungen:
- WO-A1-2010/034447
- DE-T5- 112011 102 653

## Beschreibung

### Stand der Technik

Es ist bereits eine Scheibenwischervorrichtung mit zumindest einem Wischblattadapter, mit zumindest einem Wischarmadapter und mit zumindest einer Elektroverbindungseinheit zu einer elektrischen Verbindung zumindest eines Leitungselements des Wischarmadapters mit zumindest einem Elektroanschlusselement des Wischblattadapters, vorgeschlagen worden, wobei der Wischblattadapter über zumindest ein Lagerelement des Wischarmadapters beweglich an dem Wischarmadapter gelagert ist.

Weiterer Stand der Technik ist mit der DE 11 2011 102653 T5 und der WO 2010/034447 A1 bekannt geworden.

### Offenbarung der Erfindung

Die Erfindung geht aus von einer Scheibenwischervorrichtung mit zumindest einem Wischblattadapter, mit zumindest einem Wischarmadapter und mit zumindest einer Elektroverbindungseinheit zu einer elektrischen Verbindung zumindest eines Leitungselements des Wischarmadapters mit zumindest einem Elektroanschlusselement des Wischblattadapters, wobei der Wischblattadapter über zumindest ein Lagerelement, insbesondere einen Lagerbolzen, des Wischarmadapters beweglich, insbesondere schwenkbar, an dem Wischarmadapter gelagert ist.

Es wird vorgeschlagen, dass die Elektroverbindungseinheit zumindest ein Elektroverbindungselement umfasst, welches an dem Wischarmadapter angeordnet ist und über das Lagerelement zumindest relativ zu dem Wischarmadapter bewegbar, insbesondere drehbar oder schwenkbar, gelagert ist. Vorzugsweise ist das Elektroverbindungselement als ein Teil einer Elektrosteckerverbindung der Scheibenwischervorrichtung ausgebildet. Insbesondere ist das Elektroanschlusselement des Wischblattadapters als Teil der Elektrosteckerverbindung ausgebildet. Beispielsweise sind/ist das Elektroverbindungselement und/oder das Elektroanschlusselement als Stecker, als Spule und/oder als elektrischer Kontakt ausgebildet. Insbesondere in einer Ausgestaltung des Elektroverbindungselements und des Elektroanschlusselements als Spulen, ist denkbar, dass eine elektrische Verbindung über die Elektroverbindungseinheit induktiv erfolgt. Bevorzugt sind das Elektroverbindungselement und das Elektroanschlusselement korrespondierend zueinander ausgebildet. Insbesondere ist das Elektroverbindungselement als weibliches Verbindungselement der Elektrosteckerverbindung ausgebildet und das Elektroanschlusselement als männliches Verbindungselement der Elektrosteckerverbindung ausgebildet. Vorzugsweise weist das Elektroanschlusselement in zumindest einem Bereich zumindest einen Anschlussstift auf. Bevorzugt weist das Elektroverbindungselement in zumindest einem Bereich zumindest eine Anschlussbuchse auf. Es ist aber auch denkbar, dass das Elektroverbindungselement zumindest einen Anschlussstift aufweist und/oder als männliches Verbindungselement der Elektrosteckerverbindung ausgebildet ist und das Elektroanschlusselement zumindest eine Anschlussbuchse aufweist und/oder als weibliches Verbindungselement der Elektrosteckerverbindung ausgebildet ist. Alternativ oder zusätzlich ist denkbar, dass das Elektroverbindungselement und/oder das Elektroanschlusselement zumindest teilweise, insbesondere in zumindest einem Kontaktbereich des Elektroverbindungselements und/oder des Elektroanschlusselements, eine einem Fachmann bekannte Ausgestaltung aufweisen/aufweist. Insbesondere sind/ist die Elektrosteckerverbindung und/oder die Elektroverbindungseinheit dazu vorgesehen, zumindest eine elektrische Einheit, insbesondere eine Heizeinheit, eines Scheibenwischers, welche insbesondere zumindest teilweise in einem Wischblatt angeordnet ist, mit einer Energiespeichereinheit, insbesondere einer Batterie, des Scheibenwischers, vorzugsweise über das Leitungselement des Wischarmadapters, zu verbinden. Vorzugsweise ist die Elektrosteckerverbindung in einem gekoppelten Zustand des Elektroanschlusselements und des Elektroverbindungselements dazu vorgesehen, zumindest eine elektrische Einheit, insbesondere eine Heizeinheit, eines Scheibenwischers, welche insbesondere zumindest teilweise in einem Wischblatt angeordnet ist, mit einer Energiespeichereinheit, insbesondere einer Batterie, des Scheibenwischers, vorzugsweise über das Leitungselement des Wischarmadapters, zu verbinden. Bevorzugt ist das Elektroanschlusselement zumindest elektrisch mit der elektrischen Einheit verbunden. Vorzugsweise sind/ist das Elektroverbindungselement und/oder das Elektroanschlusselement 2-polig ausgebildet. Bevorzugt ist das Leitungselement zumindest elektrisch mit dem Elektroverbindungselement, insbesondere der Anschlussbuchse, verbunden. Vorzugsweise sind das Elektroverbindungselement und das Elektroanschlusselement in zumindest einem verbundenen Zustand der Elektroverbindungseinheit zumindest elektrisch miteinander verbunden. Bevorzugt sind das Elektroverbindungselement und das Elektroanschlusselement in zumindest einem unverbundenen Zustand der Elektroverbindungseinheit zumindest elektrisch getrennt und/oder beabstandet voneinander angeordnet. Vorzugsweise sind/ist das Elektroverbindungselement und/oder das Elektroanschlusselement, insbesondere in einem von einem elektrischen Kontakt beabstandeten Bereich des Elektroverbindungselements und/oder des Elektroanschlusselements, zumindest teilweise, insbesondere zumindest größtenteils, aus einem Kunststoff, insbesondere einem Hartplastik, ausgebildet. Bevorzugt sind das Elektroverbindungselement und das Elektroanschlusselement in zumindest einem verbundenen Zustand der Elektroverbindungseinheit zumindest, insbesondere zumindest zu einem Großteil, über einen Kraftschluss aneinander befestigt. Vorzugsweise sind/ist das Elektroverbindungselement und/oder das Elektroanschlusselement in zumindest einem Bereich zumindest teilweise als ein Steckerkragen ausgebildet, welcher in dem verbundenen Zustand der Elektroverbindungseinheit formschlüssig an dem Elektroanschlusselement und/oder dem Elektroverbindungselement anliegt. Insbesondere ist der Steckerkragen dazu vorgesehen, bei einem Verbinden des Elektroverbindungselements mit dem Elektroanschlusselement zumindest teilweise auf das Elektroverbindungselement und/oder das Elektroanschlusselement aufgeschoben zu werden oder in eine von dem Elektroverbindungselement und/oder dem Elektroanschlusselement begrenzte Verbindungsausnehmung eingeschoben zu werden. Es ist aber auch denkbar, dass die Elektroverbindungseinheit zumindest ein Sicherungselement umfasst, das dazu vorgesehen ist, das Elektroverbindungselement in zumindest einem verbundenen Zustand der Elektroverbindungseinheit über eine form- und/oder kraftschlüssige Verbindung an dem Elektroanschlusselement zu sichern. Insbesondere ist das Sicherungselement an dem Elektroverbindungselement oder an dem Elektroanschlusselement angeordnet, insbesondere einstückig mit dem Elektroverbindungselement oder dem Elektroanschlusselement ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Es ist denkbar, dass das Sicherungselement beispielsweise zumindest teilweise als ein Rastelement, als ein Teil einer Schraub- oder Steckverbindung, als ein Teil eines Bajonettverschlusses, als ein Sicherungsbolzen o. dgl. ausgebildet ist.

Vorzugsweise weist das Lagerelement zumindest eine Lagerachse auf, um die der Wischblattadapter an dem Wischarmadapter gelagert ist. Bevorzugt ist das Elektroverbindungselement über das Lagerelement um die Lagerachse drehbar oder schwenkbar gelagert. Es ist auch denkbar, dass das Elektroverbindungselement, insbesondere in zumindest einem unverbundenen Zustand der Elektroverbindungseinheit, entlang der Lagerachse bewegbar gelagert ist. Besonders bevorzugt sind/ist die Lagerachse und/oder das Lagerelement zumindest im Wesentlichen senkrecht zu einer Haupterstreckungsachse des Wischarmadapters ausgerichtet. Unter "im Wesentlichen senkrecht" soll insbesondere eine Ausrichtung einer Geraden oder einer Ebene, insbesondere der Lagerachse und/oder eine Haupterstreckungsachse des Lagerelements, relativ zu einer weiteren Geraden oder einer weiteren Ebene, insbesondere der Haupterstreckungsachse des Wischarmadapters, verstanden werden, wobei die Gerade oder die Ebene und die weitere Gerade oder die weitere Ebene, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Haupterstreckungsachse" eines Bauteils, insbesondere des Wischarmadapters und/oder des Lagerelements, soll dabei insbesondere eine Achse verstanden werden, welche parallel zu einer längsten Kante eines kleinsten geometrischen Quaders verläuft, welcher das Bauteil gerade noch vollständig umschließt. Insbesondere ist das Lagerelement an einem Grundkörper des Wischarmadapters, insbesondere drehfest, befestigt. Vorzugsweise ist das Elektroverbindungselement über das Lagerelement relativ zum Grundkörper des Wischarmadapters, bewegbar, insbesondere drehbar oder schwenkbar, gelagert. Bevorzugt ist das Lagerelement derart angeordnet, dass die Lagerachse, insbesondere in zumindest einem montierten Zustand des Wischblattadapters an dem Wischarmadapter, zumindest im Wesentlichen senkrecht zu einer Haupterstreckungsachse des Wischblattadapters ausgerichtet ist.

Vorzugsweise umfasst der Wischarmadapter zumindest ein Halteelement zu einem Halten des Wischblattadapters an dem Wischarmadapter, insbesondere dem Lagerelement. Insbesondere ist das Halteelement dazu vorgesehen, den Wischblattadapter in zumindest einer Position relativ zum Wischarmadapter entlang der Lagerachse zu halten. Bevorzugt ist das Halteelement dazu vorgesehen, eine Bewegung des Wischblattadapters um das Lagerelement zumindest teilweise, insbesondere in zumindest eine Richtung um die Lagerachse, zu begrenzen. Insbesondere ist das Halteelement an dem Grundkörper des Wischarmadapters befestigt, insbesondere einstückig mit dem Grundkörper des Wischarmadapters ausgebildet. Bevorzugt ist das Elektroverbindungselement, insbesondere in zumindest einem unverbundenen Zustand der Elektroverbindungseinheit, entlang oder um das Lagerelement unabhängig von dem Halteelement relativ zum Wischarmadapter bewegbar, insbesondere drehbar oder schwenkbar, gelagert. Insbesondere ist das Elektroverbindungselement beabstandet von dem Lagerelement angeordnet. Es ist aber auch denkbar, dass das Elektroverbindungselement bewegbar, insbesondere drehbar oder schwenkbar, an dem Lagerelement angeordnet ist. Bevorzugterweise ist das Elektroverbindungselement in zumindest einem verbundenen Zustand der Elektroverbindungseinheit über das Elektroanschlusselement an eine Bewegung des Wischblattadapters um die Lagerachse gekoppelt. Insbesondere ist das Elektroanschlusselement drehfest an einem Grundkörper des Wischblattadapters befestigt.

Durch die erfindungsgemäße Ausgestaltung der Scheibenwischervorrichtung kann eine vorteilhaft sichere elektrische Verbindung des Wischblattadapters mit dem Wischarmadapter ermöglicht werden, insbesondere da sich das Elektroverbindungselement bei einer Bewegung des Wischblattadapters, insbesondere des Elektroanschlusselements, um die Lagerachse mit dem Wischblattadapter mitbewegen kann. Es kann vorteilhaft ein unbeabsichtigtes und/oder ungewolltes Lösen der Elektroverbindungseinheit, insbesondere des Elektroverbindungselements von dem Elektroanschlusselement, bei einer Bewegung des Wischblattadapters um die Lagerachse verhindert werden. Es kann eine vorteilhaft einfache und schnelle Montage der Elektroverbindungseinheit erreicht werden, insbesondere da vorteilhaft eine Zahl an möglichen Freiheitsgraden einer Bewegung des Elektroverbindungselements relativ zum Lagerelement auf zwei reduziert werden kann. Es kann ein vorteilhaft hoher Bedienkomfort, insbesondere bei einer Montage oder einer Demontage des Wischblattadapters, ermöglicht werden.

Erfindungsgemäß umfasst die Elektroverbindungseinheit zumindest ein Koppelelement, welches, insbesondere direkt, an dem Lagerelement und dem Elektroverbindungselement angeordnet ist und zumindest eine Lagerausnehmung begrenzt, wobei zumindest das Elektroverbindungselement und das Koppelelement über die Lagerausnehmung bewegbar, insbesondere drehbar oder schwenkbar, relativ zu dem Wischarmadapter an dem Lagerelement gelagert sind. Insbesondere ist das Koppelelement einstückig mit dem Elektroverbindungselement ausgebildet. Vorzugsweise ist das Koppelelement zumindest teilweise, insbesondere zumindest größtenteils, aus einem Kunststoff, insbesondere einem Hartplastik, ausgebildet. Bevorzugt weist das Koppelelement zumindest eine Lagerfläche auf, die die Lagerausnehmung begrenzt. Vorzugsweise weist das Koppelelement zumindest eine von der Lagerfläche beabstandet angeordnete weitere Lagerfläche auf, die zumindest eine weitere Lagerausnehmung begrenzt. Insbesondere sind zumindest das Elektroverbindungselement und das Koppelelement über die Lagerausnehmung und/oder die weitere Lagerausnehmung relativ zu dem Wischarmadapter bewegbar, insbesondere drehbar oder schwenkbar, an dem Lagerelement gelagert. Vorzugsweise liegt das Koppelelement über die Lagerfläche und/oder die weitere Lagerfläche an dem Lagerelement an. Besonders bevorzugt liegen/liegt die Lagerfläche und/oder die weitere Lagerfläche zumindest größtenteils, insbesondere vollflächig, an dem Lagerelement an. Insbesondere ist das Koppelelement derart ausgebildet, dass die Lagerfläche und/oder die weitere Lagerfläche das Lagerelement, insbesondere um die Lagerachse, zumindest größtenteils umschließt. Bevorzugt ist das Koppelelement dazu vorgesehen, zumindest das Elektroverbindungselement über die Lagerfläche und/oder die weitere Lagerfläche durch einen Formschluss am Lagerelement zu halten. Insbesondere ist das Koppelelement derart ausgebildet, dass die Lagerfläche und/oder die weitere Lagerfläche zumindest in dem verbundenen Zustand der Elektroverbindungseinheit in einem gleichmäßigen Abstand um die Lagerachse angeordnet sind/ist. Bevorzugt sind/ist die Lagerfläche und/oder die weitere Lagerfläche zumindest im Wesentlichen parallel zur Lagerachse ausgebildet. Darunter, dass eine Fläche, insbesondere die Lagerfläche und/oder die weitere Lagerfläche "im Wesentlichen parallel" zu einer Achse oder einer Ebene, insbesondere der Lagerachse, ausgerichtet ist, soll insbesondere verstanden werden, dass die Fläche in jedem Punkt der Fläche zu der Achse oder der Ebene einen minimalen Abstand aufweist, der für alle Punkte um weniger als 5%, vorzugsweise weniger als 3% und besonders bevorzugt weniger als 1% von einem Mittelwert des minimalen Abstands aller Punkte, abweicht. Vorzugsweise ist das Koppelelement derart ausgebildet, dass die Lagerausnehmung und/oder die weitere Lagerausnehmung eine Mittelachse aufweisen/aufweist, um die insbesondere die Lagerfläche und/oder die weitere Lagerfläche in gleichmäßigem Abstand angeordnet sind/ist. Bevorzugt ist das Koppelelement derart ausgebildet, dass in zumindest einem an dem Lagerelement befestigten Zustand der Elektroverbindungseinheit, insbesondere des Koppelelements, die Mittelachse innerhalb der Lagerachse verläuft. Vorzugsweise verlaufen zumindest ein Großteil der Flächennormalen der Lagerfläche und/oder der weiteren Lagerfläche in zumindest einem an dem Lagerelement befestigten Zustand der Elektroverbindungseinheit, insbesondere des Koppelelements, durch die Lagerachse. Es kann eine vorteilhaft sichere Lagerung des Elektroverbindungselements ermöglicht werden, wobei insbesondere über das Koppelelement vorteilhaft wenig Spiel des Elektroverbindungselements hinsichtlich einer Bewegung in eine radiale Richtung zu dem Lagerelement, insbesondere der Lagerachse, erreicht werden kann. Es kann eine vorteilhaft einfache und schnelle Montage der Elektroverbindungseinheit erreicht werden, insbesondere da vorteilhaft eine Zahl an möglichen Freiheitsgraden einer Bewegung des Elektroverbindungselements relativ zum Lagerelement auf zwei reduziert werden kann.

Zudem wird vorgeschlagen, dass der Wischarmadapter das Koppelelement zumindest in einem Bereich des Koppelelements, in dem das Koppelelement die Lagerausnehmung begrenzt und an dem Lagerelement angeordnet ist, zumindest teilweise umgibt. Insbesondere ist das Koppelelement in einem Bereich des Koppelelements, in dem die Lagerfläche die Lagerausnehmung begrenzt, zumindest teilweise von dem Grundkörper des Wischarmadapters umschlossen. Bevorzugt weist der Wischarmadapter, insbesondere der Grundkörper des Wischarmadapters, in einer sich zumindest im Wesentlichen senkrecht zur Haupterstreckungsachse des Wischarmadapters erstreckenden Schnittebene des Wischarmadapters zumindest teilweise eine halboffene, beispielsweise U-förmige oder V-förmige, oder eine geschlossene Grundform auf. Insbesondere ist das Koppelelement, insbesondere in dem Bereich des Koppelelements, in dem das Koppelelement die Lagerausnehmung begrenzt und an dem Lagerelement angeordnet ist, in zumindest einer Schnittebene des Wischarmadapters zumindest teilweise, insbesondere zumindest größtenteils, von der Grundform des Wischarmadapters, insbesondere des Grundkörpers des Wischarmadapters, umschlossen. Vorzugsweise ist ein Bereich des Koppelelements, in dem das Koppelelement, insbesondere über die weitere Lagerfläche, die weitere Lagerausnehmung begrenzt und an dem Lagerelement angeordnet ist, außerhalb des Wischarmadapters, insbesondere des Grundkörpers des Wischarmadapters, angeordnet. Bevorzugterweise ist der Bereich des Koppelelements, in dem das Koppelelement, insbesondere über die weitere Lagerfläche, die weitere Lagerausnehmung begrenzt und an dem Lagerelement angeordnet ist, entlang der Lagerachse betrachtet zwischen dem Wischblattadapter und dem Wischarmadapter, insbesondere dem Grundkörper des Wischarmadapters, angeordnet. Es kann vorteilhaft eine Bewegung des Elektroverbindungselements entlang des Lagerelements, insbesondere der Lagerachse, begrenzt werden. Es kann insbesondere vorteilhaft eine fehlerhafte Montage oder Demontage des Wischblattadapters am Wischarmadapter verhindert werden.

Ferner wird vorgeschlagen, dass die Elektroverbindungseinheit zumindest ein Anschlagelement aufweist, das an dem Elektroverbindungselement angeordnet ist und in zumindest einem verbundenen Zustand der Elektroverbindungseinheit, insbesondere direkt, an dem Wischarmadapter anliegt, wobei das Anschlagelement dazu vorgesehen ist, das Elektroverbindungselement gegen eine Bewegung in zumindest eine entlang einer, insbesondere der vorher genannten, Lagerachse des Lagerelements ausgerichtete Richtung relativ zum Wischarmadapter zu sichern. Bevorzugt ist das Anschlagelement an dem Koppelelement und/oder dem Elektroverbindungselement befestigt, insbesondere einstückig mit dem Koppelelement und/oder dem Elektroverbindungselement ausgebildet. Vorzugsweise weist das Anschlagelement zumindest eine Anschlagfläche auf, die in dem verbundenen Zustand der Elektroverbindungseinheit an dem Wischarmadapter, insbesondere dem Grundkörper des Wischarmadapters, anliegt. Bevorzugt ist die Anschlagfläche dazu vorgesehen, zumindest das Anschlagelement und das Elektroverbindungselement gegen eine Bewegung in zumindest eine Richtung entlang der Lagerachse an dem Wischarmadapter abzustützen. Insbesondere ist die Anschlagfläche als gebogene oder als ebene Fläche ausgebildet. Vorzugsweise liegt die Anschlagfläche zumindest größtenteils, insbesondere vollflächig, an dem Wischarmadapter, insbesondere dem Grundkörper des Wischarmadapters, an. Bevorzugt ist die Anschlagfläche zumindest teilweise, insbesondere zumindest größtenteils, zumindest im Wesentlichen senkrecht zur Lagerachse ausgerichtet. Insbesondere ist die Anschlagfläche zumindest teilweise, insbesondere zumindest größtenteils, zumindest im Wesentlichen senkrecht zur Lagerfläche und/oder der weiteren Lagerfläche ausgerichtet. Bevorzugt ist die Anschlagfläche zumindest teilweise, insbesondere zumindest größtenteils, zumindest im Wesentlichen parallel zur Haupterstreckungsachse des Wischarmadapters und/oder des Wischblattadapters ausgerichtet. Es ist denkbar, dass die Anschlagfläche an einer dem Wischblattadapter abgewandten Seite des Anschlagelements angeordnet ist. Insbesondere ist das Anschlagelement, insbesondere die Anschlagfläche, in dem verbundenen Zustand der Elektroverbindungseinheit zumindest teilweise zwischen dem Wischblattadapter und dem Wischarmadapter, insbesondere dem Grundkörper des Wischarmadapters, angeordnet. Bevorzugterweise begrenzt die Anschlagfläche zumindest teilweise die weitere Lagerfläche des Koppelelements. Besonders bevorzugt ist das Anschlagelement, insbesondere über das Koppelelement, zusammen mit dem Elektroverbindungselement über das Lagerelement, insbesondere um die Lagerachse, bewegbar, insbesondere schwenkbar oder drehbar, gelagert. Bevorzugt ist das Anschlagelement dazu vorgesehen, das Elektroverbindungselement, insbesondere in einem montierten Zustand des Wischblattadapters am Wischarmadapter, in einer Position relativ zu, insbesondere an, dem Elektroanschlusselement zu halten, insbesondere über ein Zusammenwirken des Anschlagelements, insbesondere der Anschlagfläche, und des Wischarmadapters, insbesondere des Grundkörpers des Wischarmadapters. Es kann vorteilhaft ein ungewolltes und/oder unbeabsichtigtes Lösen der Elektroverbindungseinheit verhindert werden, insbesondere da das Elektroverbindungselement in dem verbundenen Zustand der Elektroverbindungseinheit über das Anschlagelement an dem Elektroanschlusselement gehalten werden kann. Es kann vorteilhaft eine Fixierung der Elektroverbindungseinheit in einem montierten Zustand des Wischblattadapters erreicht werden.

Des Weiteren wird vorgeschlagen, dass das Elektroverbindungselement und das Elektroanschlusselement in zumindest einem verbundenen Zustand der Elektroverbindungseinheit bezüglich einer Bewegung des Wischblattadapters relativ zum Wischarmadapter drehfest miteinander verbunden sind, wobei die Elektroverbindungseinheit zusammen mit dem Wischblattadapter um das Lagerelement drehbar oder schwenkbar ist. Vorzugsweise sind das Elektroverbindungselement und das Elektroanschlusselement in dem verbundenen Zustand der Elektroverbindungseinheit über eine form- und/oder kraftschlüssige Verbindung drehfest miteinander verbunden. Insbesondere weisen/weist das Elektroverbindungselement und/oder das Elektroanschlusselement, insbesondere in einem Bereich eines elektrischen Kontakts, zumindest im Wesentlichen senkrecht zur Verbindungsachse eine von einer punktsymmetrischen Querschnittsfläche verschiedene Querschnittsfläche auf. Beispielsweise weisen/weist das Elektroverbindungselement und/oder das Elektroanschlusselement, insbesondere in einem Bereich eines elektrischen Kontakts, zumindest im Wesentlichen senkrecht zur Verbindungsachse eine ellipsenflächenförmige, linsenförmige oder rechteckige Querschnittsfläche auf. Es kann vorteilhaft ein ungewolltes Lösen der Elektroverbindungseinheit, insbesondere des Elektroverbindungselements von dem Elektroanschlusselement, bei einer Bewegung des Wischblattadapters relativ zum Wischarmadapter um die Lagerachse verhindert werden.

Zudem wird vorgeschlagen, dass die Elektroverbindungseinheit zumindest ein Dichtungselement umfasst, welches dazu vorgesehen ist, in zumindest einem verbundenen Zustand der Elektroverbindungseinheit zumindest einen elektrischen Kontakt des Elektroverbindungselements und/oder des Elektroanschlusselements luftdicht und/oder wasserdicht zu verschließen. Vorzugsweise ist das Dichtungselement an dem Elektroverbindungselement angeordnet. Es ist aber auch denkbar, dass das Dichtungselement an dem Elektroanschlusselement angeordnet ist. Beispielsweise ist das Dichtungselement als ein, insbesondere zumindest teilweise ringförmiger, Dichtgummi, als eine, insbesondere silikonhaltige, Dichtungsmasse, als Dichtungsband o. dgl. ausgebildet. Bevorzugt ist das Dichtungselement in dem verbundenen Zustand zumindest teilweise, insbesondere zumindest größtenteils, zwischen dem Elektroverbindungselement und dem Elektroanschlusselement angeordnet. Vorzugsweise ist das Dichtungselement dazu vorgesehen, den zumindest einen elektrischen Kontakt des Elektroverbindungselements und/oder des Elektroanschlusselements über ein, insbesondere formschlüssiges, Zusammenwirken zwischen dem Elektroverbindungselement und dem Elektroanschlusselement luftdicht und/oder wasserdicht zu verschließen. Bevorzugt ist das Dichtungselement um die Verbindungsachse angeordnet. Insbesondere umschließt das Dichtungselement die Verbindungsachse in zumindest einer Querschnittsebene des Elektroverbindungselements zumindest im Wesentlichen vollständig. Es kann ein vorteilhaft hoher Schutz der elektrischen Verbindung zwischen dem Wischblattadapter und dem Wischarmadapter vor Flüssigkeiten, insbesondere Wasser, und/oder Verschmutzungen ermöglicht werden. Es können vorteilhaft Kurzschlüsse zwischen den elektrischen Kontakten verhindert werden. Es kann eine vorteilhaft sichere elektrische Verbindung erreicht werden.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung des erfindungsgemäßen Scheibenwischers mit einer erfindungsgemäßen Scheibenwischervorrichtung in einem montierten Zustand an einer Scheibe,
- Fig. 2: eine schematische Detailansicht des erfindungsgemäßen Scheibenwischers in einem Bereich der erfindungsgemäßen Scheibenwischervorrichtung,
- Fig. 3: eine schematische Detailansicht der erfindungsgemäßen Scheibenwischervorrichtung in einem Bereich eines Elektroverbindungselements, eines Aufnahmeelements und eines Koppelelements einer Elektroverbindungseinheit der Scheibenwischervorrichtung, insbesondere ohne einen Grundkörper eines Wischarmadapters des Scheibenwischers und
- Fig. 4: eine schematische Detailansicht einer alternativen Ausgestaltung der erfindungsgemäßen Scheibenwischervorrichtung.

### Beschreibung der Ausführungsbeispiele

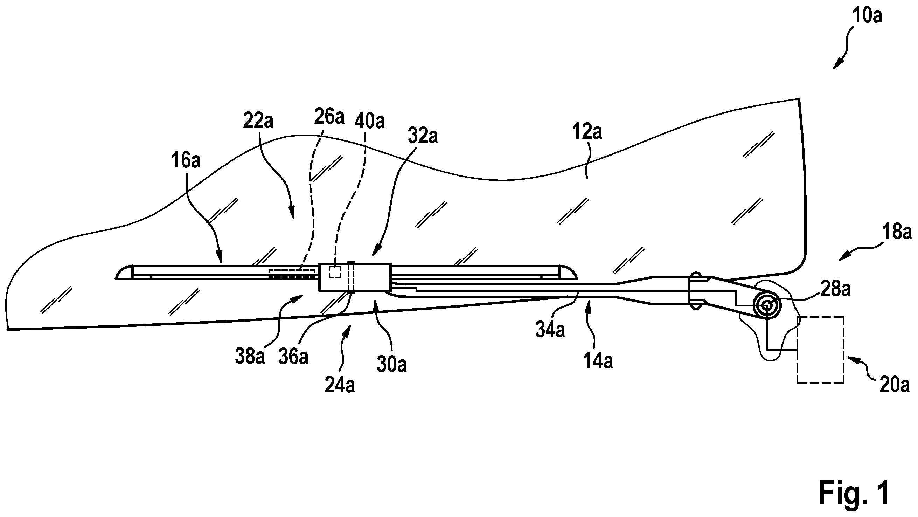

In der Figur 1 ist ein Scheibenwischer 10a in einem montierten Zustand an einer Scheibe 12a gezeigt. Insbesondere ist die Scheibe 12a als Frontscheibe eines Fahrzeugs ausgebildet, welches in der Figur nicht vollständig gezeigt ist. Es ist aber auch denkbar, dass der Scheibenwischer 10a an einer Scheibe 12a eines stationären Objekts, wie beispielsweise eines Gebäudes, oder eines anderen Fortbewegungsmittels angeordnet ist. Der Scheibenwischer 10a umfasst einen Wischarm 14a, ein Wischblatt 16a, eine Antriebseinheit 18a, eine Energiespeichereinheit 20a, eine elektrische Einheit 22a und eine Scheibenwischervorrichtung 24a. Insbesondere ist die elektrische Einheit 22a als eine Heizeinheit ausgebildet und dazu vorgesehen, zumindest einen Fluidkanal und/oder eine Oberfläche des Wischblatts 16a zu beheizen. Die als Heizeinheit ausgebildete elektrische Einheit 22a weist ein als Heizelement ausgebildetes elektrisches Element 26a auf, welches am Wischblatt 16a, insbesondere am oder im Fluidkanal des Wischblatts 16a, angeordnet ist. Es sind aber auch andere Ausgestaltungen der elektrischen Einheit 22a, insbesondere des elektrischen Elements 26a, denkbar, insbesondere als eine Sensoreinheit, eine Anzeigeeinheit o. dgl. Vorzugsweise weist die Antriebseinheit 18a eine über ein Antriebselement der Antriebseinheit 18a, welches insbesondere in der Figur 1 nicht gezeigt ist, angetriebene Antriebswelle 28a auf, wobei insbesondere der Wischarm 14a an der Antriebswelle 28a befestigt ist und über die Antriebswelle 28a entlang der Scheibe 12a bewegbar ist. Die Energiespeichereinheit 20a ist insbesondere als Batterie ausgebildet. Es sind aber auch andere Ausgestaltungen der Energiespeichereinheit 20a denkbar, insbesondere als externes Stromnetzwerk o. dgl. Der Wischarm 14a umfasst einen Wischarmadapter 30a. Insbesondere ist der Wischarmadapter 30a als ein Side-Lock-Wischarmadapter ausgebildet. Das Wischblatt 16a umfasst einen Wischblattadapter 32a, wobei das Wischblatt 16a über den Wischblattadapter 32a an dem Wischarm 14a, insbesondere dem Wischarmadapter 30a, befestigbar ist. Insbesondere ist das Wischblatt 16a über den Wischblattadapter 32a und den Wischarmadapter 30a in zumindest einem Betriebszustand des Scheibenwischers 10a, insbesondere der Scheibenwischervorrichtung 24a, insbesondere zu einer Montage oder einer Demontage des Wischblatts 16a, relativ zum Wischarm 14a drehbar gelagert.

Der Wischblattadapter 32a und der Wischarmadapter 30a sind Teil der Scheibenwischervorrichtung 24a. Der Wischarmadapter 30a weist zwei Leitungselemente 34a und ein Lagerelement 36a auf. Insbesondere ist der Wischblattadapter 32a über das Lagerelement 36a des Wischarmadapters 30a beweglich, insbesondere schwenkbar, an dem Wischarmadapter 30a gelagert. Die Leitungselemente 34a sind zu einer elektrischen Verbindung der Energiespeichereinheit 20a und der elektrischen Einheit 22a, insbesondere des elektrischen Elements 26a, vorgesehen. Insbesondere verlaufen die Leitungselemente 34a zumindest teilweise entlang des Wischarms 14a, insbesondere von der Antriebswelle 28a, bis zum Wischarmadapter 30a. Die Scheibenwischervorrichtung 24a umfasst eine Elektroverbindungseinheit 38a zu einer elektrischen Verbindung der Leitungselemente 34a des Wischarmadapters 30a mit zumindest einem Elektroanschlusselement 40a des Wischblattadapters 32a. Insbesondere ist das Elektroanschlusselement 40a elektrisch mit dem elektrischen Element 26a der elektrischen Einheit 22a verbunden.

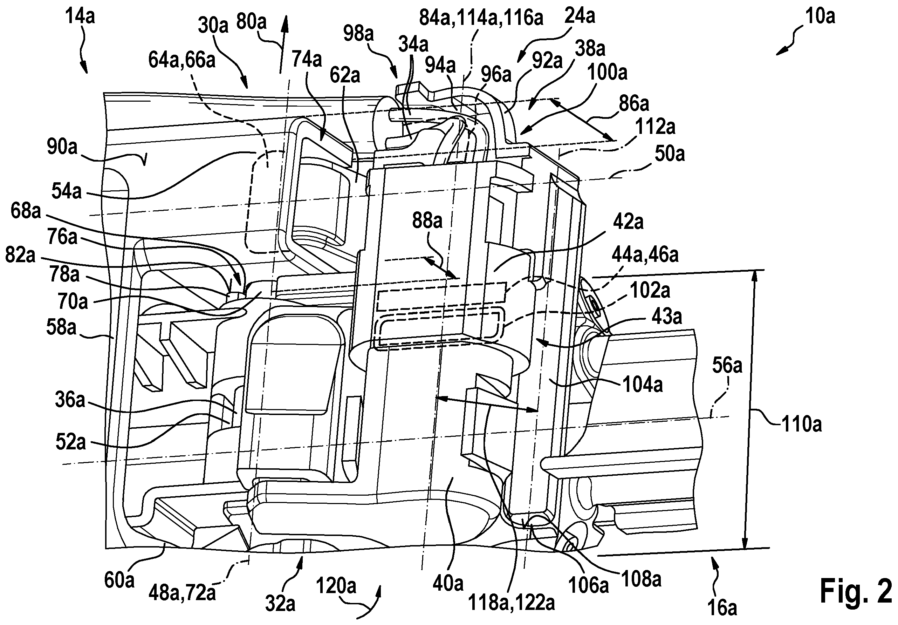

In der Figur 2 ist eine Detailansicht des Scheibenwischers 10a in einem Bereich der Scheibenwischervorrichtung 24a gezeigt. Die Elektroverbindungseinheit 38a umfasst ein Elektroverbindungselement 42a, welches an dem Wischarmadapter 30a angeordnet ist und über das Lagerelement 36a zumindest relativ zu dem Wischarmadapter 30a bewegbar, insbesondere drehbar oder schwenkbar, gelagert ist. Das Elektroverbindungselement 42a und das Elektroanschlusselement 40a sind als ein Teil einer Elektrosteckerverbindung der Scheibenwischervorrichtung 24a ausgebildet. Das Elektroverbindungselement 42a und das Elektroanschlusselement 40a sind als, insbesondere korrespondierend zueinander ausgebildete, Stecker ausgebildet. Es sind jedoch auch andere Ausgestaltungen des Elektroverbindungselements 42a und/oder des Elektroanschlusselements 40a denkbar, beispielsweise als Spule und/oder als elektrischer Kontakt. Vorzugsweise ist das Elektroanschlusselement 40a in zumindest einem Bereich 44a des Elektroanschlusselements 40a als Anschlussstift ausgebildet. Bevorzugt ist das Elektroverbindungselement 42a in zumindest einem Bereich 46a des Elektroverbindungselements 42a als Anschlussbuchse ausgebildet. Vorzugsweise sind das Elektroverbindungselement 42a und das Elektroanschlusselement 40a 2-polig ausgebildet. Es ist aber auch denkbar, dass das Elektroverbindungselement 42a und/oder das Elektroanschlusselement 40a 1-polig oder höherpolig ausgebildet sind/ist. Die Leitungselemente 34a sind zumindest elektrisch mit dem Elektroverbindungselement 42a, insbesondere dem Anschlussstift, verbunden. Das Elektroverbindungselement 42a und das Elektroanschlusselement 40a sind in zumindest einem, insbesondere dem in Figur 1 gezeigten, verbundenen Zustand der Elektroverbindungseinheit 38a elektrisch miteinander verbunden. Das Elektroverbindungselement 42a und das Elektroanschlusselement 40a sind, insbesondere mit Ausnahme eines Kontaktbereichs des Elektroverbindungselements 42a zur elektrischen Verbindung, welcher in der Figur 2 nicht gezeigt ist, zumindest größtenteils aus einem Kunststoff ausgebildet. Das Elektroverbindungselement 42a und das Elektroanschlusselement 40a sind in dem verbundenen Zustand der Elektroverbindungseinheit 38a über einen Kraftschluss aneinander befestigt. Das Elektroverbindungselement 42a ist in zumindest einem Bereich 43a zumindest teilweise als ein Steckerkragen ausgebildet, welcher in dem verbundenen Zustand der Elektroverbindungseinheit 38a formschlüssig an dem Elektroanschlusselement 40a anliegt. Insbesondere ist der Steckerkragen dazu vorgesehen, bei einem Verbinden des Elektroverbindungselements 42a mit dem Elektroanschlusselement 40a zumindest teilweise auf das Elektroanschlusselement 40a aufgeschoben zu werden. Das Elektroverbindungselement 42a und das Elektroanschlusselement 40a sind in dem verbundenen Zustand der Elektroverbindungseinheit 38a bezüglich einer Bewegung des Wischblattadapters 32a relativ zum Wischarmadapter 30a drehfest miteinander verbunden, wobei die Elektroverbindungseinheit 38a zusammen mit dem Wischblattadapter 32a um das Lagerelement 36a drehbar oder schwenkbar ist. Das Elektroverbindungselement 42a und das Elektroanschlusselement 40a sind in dem verbundenen Zustand der Elektroverbindungseinheit 38a über eine formschlüssige Verbindung drehfest miteinander verbunden. Insbesondere weisen das Elektroverbindungselement 42a und das Elektroanschlusselement 40a, insbesondere in einem Bereich 44, 46 eines elektrischen Kontakts, zumindest im Wesentlichen senkrecht zu einer Verbindungsachse 84a der Elektroverbindungseinheit 38a eine von einer punktsymmetrischen Querschnittsfläche verschiedene Querschnittsfläche auf.

Das Lagerelement 36a weist eine Lagerachse 48a auf, um die der Wischblattadapter 32a an dem Wischarmadapter 30a gelagert ist. Das Elektroverbindungselement 42a ist über das Lagerelement 36a um die Lagerachse 48a drehbar oder schwenkbar gelagert. Die Lagerachse 48a und das Lagerelement 36a sind zumindest im Wesentlichen senkrecht zu einer Haupterstreckungsachse 50a des Wischarmadapters 30a ausgerichtet. Das Lagerelement 36a ist insbesondere als Lagerbolzen ausgebildet. Es sind aber auch andere Ausgestaltungen des Lagerelements 36a denkbar. Insbesondere begrenzt der Wischblattadapter 32a eine Ausnehmung 52a, innerhalb derer das Lagerelement 36a in einem am Wischarmadapter 30a gelagerten Zustand des Wischblattadapters 32a angeordnet ist. Vorzugsweise ist das Lagerelement 36a an einem Grundkörper 54a des Wischarmadapters 30a, insbesondere drehfest, befestigt. Das Elektroverbindungselement 42a ist über das Lagerelement 36a relativ zum Grundkörper 54a des Wischarmadapters 30a, bewegbar, insbesondere drehbar oder schwenkbar, gelagert. Das Lagerelement 36a ist derart angeordnet, dass die Lagerachse 48a, insbesondere in zumindest einem montierten Zustand des Wischblattadapters 32a an dem Wischarmadapter 30a, zumindest im Wesentlichen senkrecht zu einer Haupterstreckungsachse 56a des Wischblattadapters 32a ausgerichtet ist.

Der Wischarmadapter 30a umfasst ein Halteelement 58a zu einem Halten des Wischblattadapters 32a an dem Wischarmadapter 30a, insbesondere dem Lagerelement 36a. Insbesondere ist das Befestigungselement 58a dazu vorgesehen, den Wischblattadapter 32a in zumindest einer Position relativ zum Wischarmadapter 30a entlang der Lagerachse 48a zu halten. Das Halteelement 58a ist als ein Haltefinger ausgebildet, der sich von dem Grundkörper 54a des Wischarmadapters 30a über eine maximale Quererstreckung 110a des Wischblattadapters 32a erstreckt und dazu vorgesehen ist, den Wischblattadapter 32a in einer Endmontagestellung zumindest teilweise zu umgreifen. Bevorzugt ist das Halteelement 58a dazu vorgesehen, eine Bewegung des Wischblattadapters 32a um das Lagerelement 36a zumindest teilweise, insbesondere in zumindest eine Richtung um die Lagerachse 48a, zu begrenzen. Vorzugsweise weist der Wischblattadapter 32a eine Gegenanlagefläche 60a auf, an der das Halteelement 58a in zumindest einem montierten Zustand des Wischblattadapters 32a anliegt. Bevorzugt ist die Gegenanlagefläche 60a zumindest teilweise zumindest im Wesentlichen senkrecht zur Lagerachse 48a ausgerichtet. Es sind aber auch andere Ausgestaltungen des Halteelements 58a und/oder der Gegenanlagefläche 60a denkbar. Das Halteelement 58a ist einstückig mit dem Grundkörper 54a des Wischarmadapters 30a ausgebildet. Das Elektroverbindungselement 42a ist insbesondere in zumindest einem unverbundenen Zustand der Elektroverbindungseinheit 38a über das Lagerelement 36a unabhängig von dem Halteelement 58a relativ zum Wischarmadapter 30a bewegbar, insbesondere drehbar oder schwenkbar, gelagert. Das Elektroverbindungselement 42a ist in dem verbundenen Zustand der Elektroverbindungseinheit 38a über das Elektroanschlusselement 40a an eine Bewegung des Wischblattadapters 32a um die Lagerachse 48a gekoppelt. Das Elektroanschlusselement 40a ist drehfest an einem Grundkörper 54a des Wischblattadapters 32a befestigt.

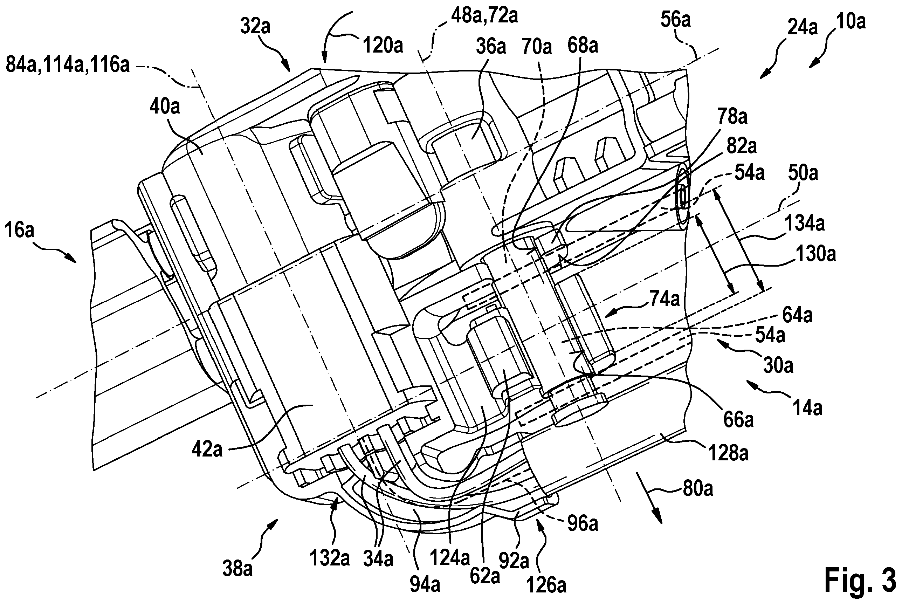

Die Elektroverbindungseinheit 38a weist ein Koppelelement 62a auf, welches, insbesondere direkt, an dem Lagerelement 36a und dem Elektroverbindungselement 42a angeordnet ist und zumindest eine Lagerausnehmung 64a (vgl. Figur 3) begrenzt, wobei zumindest das Elektroverbindungselement 42a und das Koppelelement 62a über die Lagerausnehmung 64a bewegbar, insbesondere drehbar oder schwenkbar, relativ zu dem Wischarmadapter 30a an dem Lagerelement 36a gelagert sind. Das Koppelelement 62a ist einstückig mit dem Elektroverbindungselement 42a ausgebildet. Es ist aber auch denkbar, dass das Koppelelement 62a getrennt von dem Elektroverbindungselement 42a ausgebildet ist und an dem Elektroverbindungselement 42a befestigt ist. Das Koppelelement 62a ist zumindest größtenteils aus einem Kunststoff ausgebildet. Das Koppelelement 62a weist eine Lagerfläche 66a (vgl. Figur 3) und eine weitere Lagerfläche 68a (vgl. Figur 3) auf, wobei die Lagerfläche 66a die Lagerausnehmung 64a begrenzt und die weitere Lagerfläche 68a eine weitere Lagerausnehmung 70a begrenzt. Zumindest das Elektroverbindungselement 42a und das Koppelelement 62a sind über die Lagerausnehmung 64a und die weitere Lagerausnehmung 70a relativ zu dem Wischarmadapter 30a bewegbar, insbesondere drehbar oder schwenkbar, an dem Lagerelement 36a gelagert. Das Koppelelement 62a liegt über die Lagerfläche 66a und die weitere Lagerfläche 68a an dem Lagerelement 36a an. Die Lagerfläche 66a und die weitere Lagerfläche 68a liegen zumindest größtenteils an dem Lagerelement 36a an. Das Koppelelement 62a ist derart ausgebildet, dass die Lagerfläche 66a und die weitere Lagerfläche 68a das Lagerelement 36a, insbesondere um die Lagerachse 48a, zumindest größtenteils umschließt. Insbesondere ist das Koppelelement 62a dazu vorgesehen, zumindest das Elektroverbindungselement 42a über die Lagerfläche 66a und die weitere Lagerfläche 68a durch einen Formschluss am Lagerelement 36a zu halten. Insbesondere sind die Lagerfläche 66a und die weitere Lagerfläche 68a zumindest im Wesentlichen parallel zur Lagerachse 48a ausgebildet. Das Koppelelement 62a ist derart ausgebildet, dass die Lagerausnehmung 64a und die weitere Lagerausnehmung 70a eine Mittelachse 72a aufweisen, um die insbesondere die Lagerfläche 66a und die weitere Lagerfläche 68a in gleichmäßigem Abstand angeordnet sind. Das Koppelelement 62a ist derart ausgebildet, dass in zumindest einem, insbesondere dem in Figur 1 gezeigten, an dem Lagerelement 36a befestigten Zustand der Elektroverbindungseinheit 38a, insbesondere des Koppelelements 62a, die Mittelachse 72a innerhalb der Lagerachse 48a verläuft. Der Wischarmadapter 30a umgibt das Koppelelement 62a zumindest in einem Bereich 74a des Koppelelements 62a, in dem das Koppelelement 62a die Lagerausnehmung 64a begrenzt und an dem das Lagerelement 36a angeordnet ist, zumindest teilweise. Das Koppelelement 62a ist in dem Bereich 74a des Koppelelements 62a, in dem die Lagerfläche 66a die Lagerausnehmung 64a begrenzt, zumindest teilweise von dem Grundkörper 54a des Wischarmadapters 30a umschlossen. Der Grundkörpers 54a des Wischarmadapters 30a weist in einer sich zumindest im Wesentlichen senkrecht zur Haupterstreckungsachse 50a des Wischarmadapters 30a erstreckenden Schnittebene des Wischarmadapters 30a zumindest teilweise eine U-förmige Grundform auf. Es sind aber auch andere Ausgestaltungen des Wischarmadapters 30a, insbesondere des Grundkörpers 54a des Wischarmadapters 30a, denkbar, beispielsweise mit einer V-förmigen oder einer geschlossenen Grundform. Das Koppelelement 62a ist in dem Bereich 74a des Koppelelements 62a, in dem das Koppelelement 62a die Lagerausnehmung 64a begrenzt und an dem Lagerelement 36a angeordnet ist, in zumindest einer Schnittebene des Wischarmadapters 30a zumindest größtenteils von der Grundform des Grundkörpers 54a des Wischarmadapters 30a umschlossen. Ein Bereich 76a des Koppelelements 62a, in dem das Koppelelement 62a, insbesondere über die weitere Lagerfläche 68a, die weitere Lagerausnehmung 70a begrenzt und an dem Lagerelement 36a angeordnet ist, ist außerhalb des Wischarmadapters 30a, insbesondere des Grundkörpers 54a des Wischarmadapters 30a, angeordnet. Insbesondere ist der Bereich 76a des Koppelelements 62a, in dem das Koppelelement 62a, insbesondere über die weitere Lagerfläche 68a, die weitere Lagerausnehmung 70a begrenzt und an dem Lagerelement 36a angeordnet ist, entlang der Lagerachse 48a betrachtet zwischen dem Wischblattadapter 32a und dem Wischarmadapter 30a, insbesondere dem Grundkörper 54a des Wischarmadapters 30a, angeordnet. Es sind aber auch andere Ausgestaltungen des Koppelelements 62a denkbar.

Die Elektroverbindungseinheit 38a umfasst ein Anschlagelement 78a, das, insbesondere über das Koppelelement 62a, an dem Elektroverbindungselement 42a angeordnet ist und in dem verbundenen Zustand der Elektroverbindungseinheit 38a, insbesondere direkt, an dem Wischarmadapter 30a, insbesondere dem Grundkörper 54a des Wischarmadapters 30a, anliegt, wobei das Anschlagelement 78a dazu vorgesehen ist, das Elektroverbindungselement 42a gegen eine Bewegung in zumindest eine entlang der Lagerachse 48a des Lagerelements 36a ausgerichtete Richtung 80a relativ zum Wischarmadapter 30a zu sichern. Das Anschlagelement 78a ist einstückig mit dem Koppelelement 62a und dem Elektroverbindungselement 42a ausgebildet. Das Anschlagelement 78a weist eine Anschlagfläche 82a auf, die in dem verbundenen Zustand der Elektroverbindungseinheit 38a an dem Wischarmadapter 30a, insbesondere dem Grundkörper 54a des Wischarmadapters 30a, anliegt. Insbesondere ist die Anschlagfläche 82a als ebene Fläche ausgebildet. Die Anschlagfläche 82a liegt vollflächig an dem Wischarmadapter 30a, insbesondere dem Grundkörper 54a des Wischarmadapters 30a, an. Die Anschlagfläche 82a ist zumindest größtenteils zumindest im Wesentlichen senkrecht zur Lagerachse 48a ausgerichtet. Die Anschlagfläche 82a ist zumindest größtenteils zumindest im Wesentlichen senkrecht zur Lagerfläche 66a und der weiteren Lagerfläche 68a ausgerichtet. Die Anschlagfläche 82a ist zumindest größtenteils zumindest im Wesentlichen parallel zur Haupterstreckungsachse 50a des Wischarmadapters 30a ausgerichtet. Die Anschlagfläche 82a ist, insbesondere in dem in der Figur 2 gezeigten montierten Zustand des Wischblattadapters 32a, zumindest größtenteils zumindest im Wesentlichen parallel zur Haupterstreckungsachse 56a des Wischblattadapters 32a ausgerichtet. Die Anschlagfläche 82a ist an einer dem Wischblattadapter 32a abgewandten Seite des Anschlagelements 78a angeordnet. Insbesondere ist das Anschlagelement 78a, insbesondere die Anschlagfläche 82a, in dem verbundenen Zustand der Elektroverbindungseinheit 38a zumindest teilweise zwischen dem Wischblattadapter 32a und dem Wischarmadapter 30a, insbesondere dem Grundkörper 54a des Wischarmadapters 30a, angeordnet. Die Anschlagfläche 82a begrenzt zumindest teilweise die weitere Lagerfläche 68a des Koppelelements 62a. Insbesondere ist das Anschlagelement 78a, insbesondere über das Koppelelement 62a, zusammen mit dem Elektroverbindungselement 42a über das Lagerelement 36a, insbesondere um die Lagerachse 48a, bewegbar, insbesondere schwenkbar oder drehbar, gelagert. Bevorzugt ist das Anschlagelement 78a dazu vorgesehen, das Elektroverbindungselement 42a, insbesondere in einem montierten Zustand des Wischblattadapters 32a am Wischarmadapter 30a, in einer Position relativ zu, insbesondere an, dem Elektroanschlusselement 40a zu halten, insbesondere über ein Zusammenwirken des Anschlagelements 78a, insbesondere der Anschlagfläche 82a, und des Wischarmadapters 30a, insbesondere des Grundkörpers 54a des Wischarmadapters 30a. Es sind aber auch andere Ausgestaltungen des Anschlagelements 78a denkbar, wobei das Anschlagelement 78a beispielsweise getrennt von dem Koppelelement 62a ausgebildet ist.

Die Elektroverbindungseinheit 38a weist die Verbindungsachse 84a auf, entlang derer das Elektroverbindungselement 42a und das Elektroanschlusselement 40a miteinander verbindbar und/oder voneinander trennbar sind, wobei das Elektroverbindungselement 42a, insbesondere in zumindest einem verbundenen Zustand der Elektroverbindungseinheit 38a, derart angeordnet ist, dass die Verbindungsachse 84a zumindest im Wesentlichen parallel zu der Lagerachse 48a des Lagerelements 36a ausgerichtet ist. Die Verbindungsachse 84a verläuft mittig durch das Elektroverbindungselement 42a. Die Verbindungsachse 84a ist zumindest im Wesentlichen senkrecht zur Haupterstreckungsachse 50a des Wischarmadapters 30a und zur Haupterstreckungsachse 56a des Wischblattadapters 32a ausgerichtet. Die Verbindungsachse 84a ist zumindest im Wesentlichen parallel zu der Lagerfläche 66a und der weiteren Lagerfläche 68a ausgerichtet. Die Verbindungsachse 84a ist zumindest im Wesentlichen senkrecht zur Anschlagfläche 82a ausgerichtet. Insbesondere ist das Elektroverbindungselement 42a derart ausgebildet und/oder angeordnet, dass die Verbindungsachse 84a und das Elektroverbindungselement 42a entlang einer sich zumindest im Wesentlichen parallel zur Haupterstreckungsachse 50a des Wischarmadapters 30a und zur Lagerachse 48a erstreckenden Ebene des Wischarmadapters 30a betrachtet innerhalb einer maximalen Tiefenerstreckung 86a des Wischarmadapters 30a angeordnet ist, wobei insbesondere die maximale Tiefenerstreckung 86a des Wischarmadapters 30a zumindest im Wesentlichen senkrecht zu der sich zumindest im Wesentlichen parallel zur Haupterstreckungsachse 50a des Wischarmadapters 30a und zur Lagerachse 48a erstreckenden Ebene des Wischarmadapters 30a ausgerichtet ist.

Die Elektroverbindungseinheit 38a, insbesondere das Elektroverbindungselement 42a, weist entlang einer zumindest im Wesentlichen senkrecht zu der Haupterstreckungsachse 50a des Wischarmadapters 30a und zu der Lagerachse 48a des Lagerelements 36a ausgerichteten Achse einen maximalen Abstand 88a von höchstens 3 cm, vorzugsweise höchstens 2 cm, besonders bevorzugt höchstens 1 cm und ganz besonders bevorzugt von 1 cm, zu einer die Lagerachse 48a umfassenden und zumindest im Wesentlichen parallel zur Haupterstreckungsachse 50a des Wischarmadapters 30a ausgerichteten Ebene des Wischarmadapters 30a auf. Der Grundkörper 54a des Wischarmadapters 30a weist eine Deckenfläche 90a auf, die an einer zumindest im Wesentlichen senkrecht zur Verbindungsachse 84a und zur Lagerachse 48a und zumindest im Wesentlichen senkrecht zur Haupterstreckungsachse 50a des Wischarmadapters 30a ausgerichteten Seite des Grundkörpers 54a des Wischarmadapters 30a angeordnet ist. Die Deckenfläche 90a ist zumindest größtenteils zumindest im Wesentlichen parallel zur Verbindungsachse 84a, zur Lagerachse 48a und zur Haupterstreckungsachse 50a des Wischarmadapters 30a ausgerichtet. Die Elektroverbindungseinheit 38a, insbesondere das Elektroverbindungselement 42a, ist in zumindest einem montierten Zustand des Wischblattadapters 32a am Wischarmadapter 30a entlang der Deckenfläche 90a betrachtet zumindest im Wesentlichen vollständig auf einer dem Wischblattadapter 32a zugewandten Seite der Deckenfläche 90a angeordnet.

Die Elektroverbindungseinheit 38a umfasst ein Aufnahmeelement 92a zur zumindest teilweisen Aufnahme der Leitungselemente 34a, wobei das Aufnahmeelement 92a in zumindest einem verbundenen Zustand der Elektroverbindungseinheit 38a zumindest über das Elektroverbindungselement 42a bewegbar, insbesondere schwenkbar oder drehbar, an dem Wischarmadapter 30a angeordnet ist. Das Aufnahmeelement 92a ist einstückig mit dem Elektroverbindungselement 42a und dem Koppelelement 62a ausgebildet. Das Aufnahmeelement 92a begrenzt eine Aufnahmeausnehmung 94a, wobei die Leitungselemente 34a zumindest teilweise innerhalb der Aufnahmeausnehmung 94a angeordnet sind. Die Leitungselemente 34a sind jeweils als ein Kabel ausgebildet. Es sind aber auch andere Ausgestaltungen der Leitungselemente 34a denkbar. Die Aufnahmeausnehmung 94a erstreckt sich entlang einer Führungsstrecke 96a des Aufnahmeelements 92a. Das Aufnahmeelement 92a ist derart ausgebildet, dass sich die Aufnahmeausnehmung 94a entlang der Führungsstrecke 96a des Aufnahmeelements 92a bis zum Elektroverbindungselement 42a erstreckt. Das Aufnahmeelement 92a umschließt die Aufnahmeausnehmung 94a in zumindest einer zumindest im Wesentlichen senkrecht zur Führungsstrecke 96a ausgerichteten Ebene des Aufnahmeelements 92a betrachtet zumindest größtenteils. Das Aufnahmeelement 92a ist zumindest teilweise kanalartig ausgebildet, wobei die Leitungselemente 34a innerhalb der Aufnahmeausnehmung 94a geführt werden. Die Führungsstrecke 96a ist zumindest teilweise gebogen ausgebildet. Das Aufnahmeelement 92a ist derart ausgebildet, dass sich die Führungsstrecke 96a, insbesondere in zumindest einem montierten Zustand des Wischblattadapters 32a am Wischarmadapter 30a, innerhalb einer zumindest im Wesentlichen parallel zur Haupterstreckungsachse 50a des Wischarmadapters 30a, zur Verbindungsachse 84a und/oder zur Lagerachse 48a ausgerichteten Ebene erstreckt. Das Aufnahmeelement 92a ist derart ausgebildet, dass die Führungsstrecke 96a, insbesondere in zumindest einem montierten Zustand des Wischblattadapters 32a am Wischarmadapter 30a, in zumindest einem Bereich 98a zumindest im Wesentlichen parallel zur Haupterstreckungsachse 50a des Wischarmadapters 30a angeordnet ist. Das Aufnahmeelement 92a ist derart ausgebildet, dass die Führungsstrecke 96a in zumindest einem, insbesondere an das Elektroverbindungselement 42a angrenzenden, weiteren Bereich 100a zumindest im Wesentlichen parallel zur Verbindungsachse 84a und/oder zumindest im Wesentlichen senkrecht zur Haupterstreckungsachse 50a des Wischarmadapters 30a angeordnet ist.

Die Elektroverbindungseinheit 38a umfasst ein Dichtungselement 102a, welches dazu vorgesehen ist, in dem verbundenen Zustand der Elektroverbindungseinheit 38a zumindest einen elektrischen Kontakt des Elektroverbindungselements 42a und/oder des Elektroanschlusselements 40a luftdicht und/oder wasserdicht zu verschließen. Das Dichtungselement 102a ist an dem Elektroverbindungselement 42a angeordnet. Es ist auch denkbar, dass das Dichtungselement 102a an dem Elektroanschlusselement 40a angeordnet ist. Das Dichtungselement 102a ist als ein, insbesondere zumindest teilweise ringförmiger, Dichtgummi ausgebildet. Es sind jedoch auch andere Ausgestaltungen des Dichtungselements 102a denkbar, beispielsweise als eine, insbesondere silikonhaltige, Dichtungsmasse, als Dichtungsband o. dgl. Das Dichtungselement 102a ist in dem verbundenen Zustand zumindest größtenteils zwischen dem Elektroverbindungselement 42a und dem Elektroanschlusselement 40a angeordnet. Das Dichtungselement 102a ist insbesondere dazu vorgesehen, den zumindest einen elektrischen Kontakt des Elektroverbindungselements 42a und/oder des Elektroanschlusselements 40a über ein formschlüssiges Zusammenwirken zwischen dem Elektroverbindungselement 42a und dem Elektroanschlusselement 40a luftdicht und/oder wasserdicht zu verschließen. Das Dichtungselement 102a ist um die Verbindungsachse 84a angeordnet. Das Dichtungselement 102a umschließt die Verbindungsachse 84a in zumindest einer Querschnittsebene des Elektroverbindungselements 42a zumindest im Wesentlichen vollständig.

Die Elektroverbindungseinheit 38a umfasst ein Formschlusselement 104a, welches an zumindest einer zumindest im Wesentlichen parallel zur Verbindungsachse 84a der Elektroverbindungseinheit 38a und zur Haupterstreckungsachse 56a des Wischblattadapters 32a ausgerichteten Anlagefläche 106a des Wischblattadapters 32a anliegt und dazu vorgesehen ist, zumindest eine Bewegung des Elektroverbindungselements 42a um die Lagerachse 48a des Lagerelements 36a bei einem Verbinden der Elektroverbindungseinheit 38a mit dem Elektroanschlusselement 40a zu begrenzen. Das Formschlusselement 104a ist einstückig mit dem Elektroverbindungselement 42a und/oder dem Koppelelement 62a ausgebildet. Das Formschlusselement 104a weist eine Auflagefläche 108a auf, wobei die Auflagefläche 108a in dem verbundenen Zustand der Elektroverbindungseinheit 38a zumindest größtenteils und/oder vollflächig an der Anlagefläche 106a anliegt. Die Auflagefläche 108a und die Anlagefläche 106a sind als gebogene Flächen ausgebildet. Es ist aber auch denkbar, dass die Auflagefläche 108a und die Anlagefläche 106a als ebene Flächen ausgebildet sind. Die Anlagefläche 106a erstreckt sich über insbesondere mindestens 50%, vorzugsweise mindestens 60%, besonders bevorzugt mindestens 70% und ganz besonders bevorzugt über 90%, der maximalen Quererstreckung 110a des Wischblattadapters 32a. Insbesondere ist die maximalen Quererstreckung 110a des Wischblattadapters 32a zumindest im Wesentlichen senkrecht zur Haupterstreckungsachse 56a des Wischblattadapters 32a ausgerichtet. Die maximalen Quererstreckung 110a des Wischblattadapters 32a ist zumindest im Wesentlichen parallel zur Verbindungsachse 84a und der Lagerachse 48a ausgerichtet. Das Formschlusselement 104a erstreckt sich, insbesondere in dem verbundenen Zustand der Elektroverbindungseinheit 38a, über insbesondere mindestens 50%, vorzugsweise mindestens 60%, besonders bevorzugt mindestens 70% und ganz besonders bevorzugt über 90%, der maximalen Quererstreckung 110a des Wischblattadapters 32a. Das Formschlusselement 104a erstreckt sich zumindest größtenteils zumindest im Wesentlichen parallel zur Verbindungsachse 84a und der Lagerachse 48a. Das Formschlusselement 104a ist in einer durch die Verbindungsachse 84a und die Lagerachse 48a aufgespannten Projektionsebene betrachtet auf einer der Verbindungsachse 84a zugewandten Seite der Lagerachse 48a angeordnet. Das Formschlusselement 104a ist in der durch die Verbindungsachse 84a und die Lagerachse 48a aufgespannten Projektionsebene betrachtet auf einer der Lagerachse 48a abgewandten Seite der Verbindungsachse 84a angeordnet. Es ist jedoch auch denkbar, dass das Formschlusselement 104a in der durch die Verbindungsachse 84a und die Lagerachse 48a aufgespannten Projektionsebene betrachtet zwischen der Lagerachse 48a und der Verbindungsachse 84a angeordnet ist. Insbesondere ist das Formschlusselement 104a als Haltefinger ausgebildet. Es sind jedoch auch andere Ausgestaltungen des Formschlusselements 104a denkbar, als Bolzen, als Stift o. dgl. Insbesondere ist das Formschlusselement 104a dazu vorgesehen, das Elektroverbindungselement 42a bei einem Verbinden der Elektroverbindungseinheit 38a, insbesondere zu einem Verbinden des Elektroverbindungselements 42a mit dem Elektroanschlusselement 40a, auf der Verbindungsachse 84a zu zentrieren. Die Anlagefläche 106a und die Auflagefläche 108a weisen eine gemeinsame Kontaktachse 112a auf, entlang derer die Anlagefläche 106a und die Auflagefläche 108a in dem verbundenen Zustand der Elektroverbindungseinheit 38a aneinander anliegen. Das Elektroverbindungselement 42a und das Elektroanschlusselement 40a weisen jeweils zumindest eine Mittelachse 114a, 116a auf, die zumindest im Wesentlichen parallel zur Verbindungsachse 84a ausgerichtet sind. Das Formschlusselement 104a ist derart angeordnet und/oder ausgebildet, dass ein minimaler Abstand 118a der Kontaktachse 112a und der Mittelachse 114a des Elektroverbindungselements 42a entlang einer Umfangsrichtung 120a um die Lagerachse 48a zumindest im Wesentlichen einem minimalen Abstand 122a der Kontaktachse 112a und der Mittelachse 116a des Elektroanschlusselements 40a entlang der Umfangsrichtung 120a um die Lagerachse 48a entspricht.

In Figur 3 ist die Scheibenwischervorrichtung 24a unabhängig von dem Grundkörper 54a des Wischarmadapters 30a und dem Halteelement 58a des Wischarmadapters 30a gezeigt, wobei insbesondere der Grundkörper 54a des Wischarmadapters 30a am Lagerelement 36a lediglich angedeutet ist. Das Koppelelement 62a begrenzt eine Aussparung 124a, die sich zumindest im Wesentlichen parallel zur Lagerachse 48a erstreckt. Insbesondere wird der Grundkörper 54a des Wischarmadapters 30a bei einer Bewegung des Koppelelements 62a und des Elektroverbindungselements 42a um die Lagerachse 48a, insbesondere zusammen mit dem Wischblattadapter 32a, zumindest teilweise in die Aussparung 124a hinein bewegt. Bevorzugt begrenzt die Aussparung 124a eine Bewegung des Koppelelements 62a und des Elektroverbindungselements 42a um die Lagerachse 48a, insbesondere entlang der Umfangsrichtung 120a. Das Aufnahmeelement 92a, insbesondere die von dem Aufnahmeelement 92a begrenzte Aufnahmeausnehmung 94a, ist in einem wischarmadapterseitigen Endbereich 126a des Aufnahmeelements 92a derart ausgebildet, dass eine Leitungshülle 128a der Leitungselemente 34a zumindest teilweise von dem Aufnahmeelement 92a umschlossen ist. Die zwei Leitungselemente 34a sind zumindest teilweise innerhalb der Aufnahmeausnehmung 94a angeordnet. Insbesondere ist die Aufnahmeausnehmung 94a in einem elektroverbindungselementseitigen Endbereich 132a des Aufnahmeelements 92a unterteilt ausgebildet, wobei die zwei Leitungselemente 34a getrennt an das Elektroverbindungselement 42a geführt werden. Das Koppelelement 62a ist in dem Bereich 74a des Koppelelements 62a, in dem das Koppelelement 62a die Lagerausnehmung 64a begrenzt und an dem Lagerelement 36a angeordnet ist, entlang der Lagerachse 48a über eine Länge 130a ausgebildet, die kleiner ist, als eine innere maximale Quererstreckung 134a des Grundkörpers 54a des Wischarmadapters 30a entlang der Langerachse 48a. Insbesondere umschließen die Lagerfläche 66a und die weitere Lagerfläche 68a das Lagerelement 36a um die Lagerachse 48a insbesondere zu mehr als 50%, vorzugsweise zu mehr als 55%, besonders bevorzugt zu mehr als 60% und ganz besonders bevorzugt zu 65%, eines Umfangs des Lagerelements 36a, insbesondere in einer sich zumindest im Wesentlichen senkrecht zur Lagerachse 48a erstreckenden Ebene des Lagerelements 36a betrachtet. Es ist auch denkbar, dass die Lagerfläche 66a und die weitere Lagerfläche 68a voneinander verschieden ausgebildet sind.

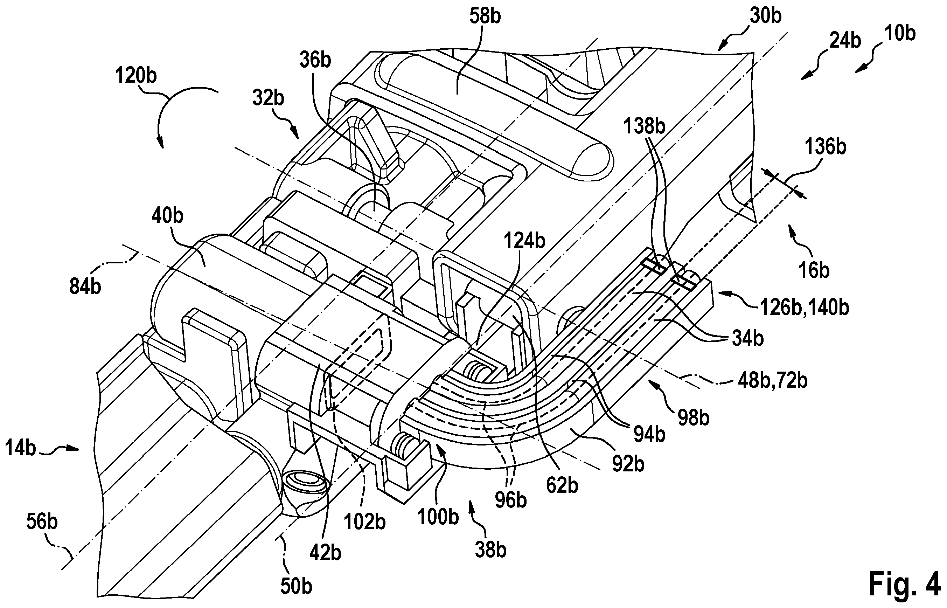

In der Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

In der Figur 4 ist eine alternative Ausgestaltung einer Scheibenwischervorrichtung 24b eines Scheibenwischers 10b gezeigt. Die Scheibenwischervorrichtung 24b umfasst einen Wischblattadapter 32b, einen Wischarmadapter 30b und eine Elektroverbindungseinheit 38b zu einer elektrischen Verbindung von zwei Leitungselementen 34b des Wischarmadapters 30b mit einem Elektroanschlusselement 40b des Wischblattadapters 32b. Der Wischblattadapter 32b ist über ein, insbesondere als Lagerbolzen ausgebildetes, Lagerelement 36b des Wischarmadapters 30b beweglich, insbesondere schwenkbar, an dem Wischarmadapter 30b gelagert. Die Elektroverbindungseinheit 38b umfasst ein Elektroverbindungselement 42b, welches an dem Wischarmadapter 30b angeordnet ist und über das Lagerelement 36b zumindest relativ zu dem Wischarmadapter 30b bewegbar, insbesondere drehbar oder schwenkbar, gelagert ist. Die in der Figur 4 dargestellte Scheibenwischervorrichtung 24b weist eine zumindest im Wesentlichen analoge Ausgestaltung zu der in der Beschreibung der Figuren 1 bis 3 beschriebenen Scheibenwischervorrichtung 24a auf, so dass bezüglich einer Ausgestaltung der in der Figur 4 dargestellten Scheibenwischervorrichtung 24b zumindest im Wesentlichen auf die Beschreibung der Figuren 1 bis 3 verwiesen werden kann. Im Unterschied zu der in der Beschreibung der Figuren 1 bis 3 beschriebenen Scheibenwischervorrichtung 24a weist die in der Figur 4 dargestellte Scheibenwischervorrichtung 24b vorzugsweise ein Aufnahmeelement 92b zur zumindest teilweisen Aufnahme der zwei Leitungselemente 34b auf, wobei das Aufnahmeelement 92b in zumindest einem verbundenen Zustand der Elektroverbindungseinheit 38b zumindest über das Elektroverbindungselement 42b bewegbar, insbesondere schwenkbar oder drehbar, an dem Wischarmadapter 30b angeordnet ist. Das Aufnahmeelement 92b ist einstückig mit dem Elektroverbindungselement 42b und einem Koppelelement 62b der Elektroverbindungseinheit 38b ausgebildet. Das Aufnahmeelement 92b begrenzt zwei getrennt voneinander ausgebildete Aufnahmeausnehmungen 94b, wobei je eines der Leitungselemente 34b zumindest teilweise innerhalb einer der Aufnahmeausnehmungen 94b angeordnet ist. Die Aufnahmeausnehmungen 94b erstrecken sich jeweils entlang einer Führungsstrecke 96b des Aufnahmeelements 92b. Das Aufnahmeelement 92b ist derart ausgebildet, dass sich die Aufnahmeausnehmungen 94b jeweils entlang der Führungsstrecke 96b des Aufnahmeelements 92b bis zum Elektroverbindungselement 42b erstrecken. Das Aufnahmeelement 92b umschließt die Aufnahmeausnehmungen 94a in zumindest einer zumindest im Wesentlichen senkrecht zur Führungsstrecke 96b ausgerichteten Ebene des Aufnahmeelements 92b betrachtet zumindest größtenteils. Das Aufnahmeelement 92b ist derart ausgebildet, dass sich die Aufnahmeausnehmungen 94b jeweils entlang der Führungsstrecke 96b über eine gleichbleibende, insbesondere zumindest im Wesentlichen senkrecht zur Führungsstrecke 96b ausgerichtete, maximale Quererstreckung 136b erstrecken. Das Aufnahmeelement 92b ist derart ausgebildet, dass die Führungsstrecke 96b zumindest teilweise gebogen ausgebildet ist. Das Aufnahmeelement 92b ist derart ausgebildet, dass sich die Führungsstrecke 96b, insbesondere in zumindest einem montierten Zustand des Wischblattadapters 32b am Wischarmadapter 30b, innerhalb einer zumindest im Wesentlichen parallel zu einer Haupterstreckungsachse 50b des Wischarmadapters 30b, zu einer Verbindungsachse 84b und/oder zu einer Lagerachse 48b des Lagerelements 36b ausgerichteten Ebene erstreckt. Das Aufnahmeelement 92b ist derart ausgebildet, dass die Führungsstrecke 96b, insbesondere in zumindest einem montierten Zustand des Wischblattadapters 32b am Wischarmadapter 30b, in zumindest einem Bereich 98b zumindest im Wesentlichen parallel zur Haupterstreckungsachse 50b des Wischarmadapters 30b angeordnet ist und geradlinig ausgebildet ist. Das Aufnahmeelement 92b ist derart ausgebildet, dass die Führungsstrecke 96b in zumindest einem, insbesondere an das Elektroverbindungselement 42b angrenzenden, weiteren Bereich 100b zumindest im Wesentlichen parallel zur Verbindungsachse 84b und/oder zumindest im Wesentlichen senkrecht zur Haupterstreckungsachse 50b des Wischarmadapters 30b angeordnet und geradlinig ausgebildet ist. Die Elektroverbindungseinheit 38b umfasst zwei Fixierelemente 138b, welche an dem Aufnahmeelement 92b angeordnet sind. Die Fixierelemente 138b sind dazu vorgesehen, die Leitungselemente 34b relativ zum Aufnahmeelement 92b zumindest teilweise zu fixieren. Die Fixierelemente 138b sind als Klammern ausgebildet. Es sind aber auch andere Ausgestaltungen der Fixierelemente 138b denkbar, beispielsweise als Haken, als Schlaufen, als Formbauteile, insbesondere zu einer Verengung der Aufnahmeausnehmungen 94b, o. dgl. Die Fixierelemente 138b sind jeweils an einer der Aufnahmeausnehmungen 94b angeordnet. Die Fixierelemente 138b sind jeweils zumindest teilweise in einem wischarmadapterseitigen Endbereich 126b der Aufnahmeausnehmungen 94b angeordnet. Besonders bevorzugt sind die Fixierelemente 138b zumindest teilweise in einem dem Elektroverbindungselement 42b gegenüberliegenden Endbereich 140b der Führungsstrecke 96b angeordnet. Vorzugsweise ist die Scheibenwischervorrichtung 24b im Vergleich zur der in den Figuren 1 bis 3 beschriebenen Scheibenwischervorrichtung 10a frei von einem Formschlusselement 104a ausgebildet.

## Patentansprüche

1. Scheibenwischervorrichtung mit zumindest einem Wischblattadapter (32a; 32b), mit zumindest einem Wischarmadapter (30a; 30b) und mit zumindest einer Elektroverbindungseinheit (38a; 38b) zu einer elektrischen Verbindung zumindest eines Leitungselements (34a; 34b) des Wischarmadapters (30a; 30b) mit zumindest einem Elektroanschlusselement (40a; 40b) des Wischblattadapters (32a; 32b), wobei der Wischblattadapter (32a; 32b) über zumindest ein Lagerelement (36a; 36b), insbesondere einen Lagerbolzen, des Wischarmadapters (30a; 30b) beweglich, insbesondere schwenkbar, an dem Wischarmadapter (30a; 30b) gelagert ist, **wobei** die Elektroverbindungseinheit (38a; 38b) zumindest ein Elektroverbindungselement (42a; 42b) umfasst, welches an dem Wischarmadapter (30a; 30b) angeordnet ist und über das Lagerelement (36a; 36b) zumindest relativ zu dem Wischarmadapter (30a; 30b) bewegbar, insbesondere drehbar oder schwenkbar, gelagert ist, **dadurch gekennzeichnet, dass** die Elektroverbindungseinheit (38a; 38b) zumindest ein Koppelelement (62a; 62b) umfasst, welches, insbesondere direkt, an dem Lagerelement (36a; 36b) und dem Elektroverbindungselement (42a; 42b) angeordnet ist und zumindest eine Lagerausnehmung (64a; 64b) begrenzt, wobei zumindest das Elektroverbindungselement (42a; 42b) und das Koppelelement (62a; 62b) über die Lagerausnehmung (64a; 64b) bewegbar, insbesondere drehbar oder schwenkbar, relativ zu dem Wischarmadapter (30a; 30b) an dem Lagerelement (36a; 36b) gelagert sind.

2. Scheibenwischervorrichtung nach Anspruch 1, **dadurch gekennzeichnet, dass** der Wischarmadapter (30a; 30b) das Koppelelement (62a; 62b) zumindest in einem Bereich (74a; 74b) des Koppelelements (62a; 62b), in dem das Koppelelement (62a; 62b) die Lagerausnehmung (64a; 64b) begrenzt und an dem Lagerelement (36a; 36b) angeordnet ist, zumindest teilweise umgibt.

3. Scheibenwischervorrichtung nach Anspruch 2, **dadurch gekennzeichnet, dass** die Elektroverbindungseinheit (38a; 38b) zumindest ein Anschlagelement (78a; 78b) aufweist, das an dem Elektroverbindungselement (42a; 42b) angeordnet ist und in zumindest einem verbundenen Zustand der Elektroverbindungseinheit (38a; 38b), insbesondere direkt, an dem Wischarmadapter (30a; 30b) anliegt, wobei das Anschlagelement (78a; 78b) dazu vorgesehen ist, das Elektroverbindungselement (42a; 42b) gegen eine Bewegung in zumindest eine entlang einer Lagerachse (48a; 48b) des Lagerelements (36a; 36b) ausgerichtete Richtung (80a) relativ zum Wischarmadapter (30a; 30b) zu sichern.

4. Scheibenwischervorrichtung nach einem der vorhergehenden Ansprüche, **dadurch gekennzeichnet, dass** das Elektroverbindungselement (42a; 42b) und das Elektroanschlusselement (40a; 40b) in zumindest einem verbundenen Zustand der Elektroverbindungseinheit (38a; 38b) bezüglich einer Bewegung des Wischblattadapters (32a; 32b) relativ zum Wischarmadapter (30a; 30b) drehfest miteinander verbunden sind, wobei die Elektroverbindungseinheit (38a; 38b) zusammen mit dem Wischblattadapter (32a; 32b) um das Lagerelement (36a; 36b) drehbar oder schwenkbar ist.

5. Scheibenwischervorrichtung nach einem der vorhergehenden Ansprüche, **dadurch gekennzeichnet, dass** die Elektroverbindungseinheit (38a; 38b) zumindest ein Dichtungselement (102a) umfasst, welches dazu vorgesehen ist, in zumindest einem verbundenen Zustand der Elektroverbindungseinheit (38a; 38b) zumindest einen elektrischen Kontakt des Elektroverbindungselements (42a; 42b) und/oder des Elektroanschlusselements (40a; 40b) luftdicht und/oder wasserdicht zu verschließen.

## Claims

1. Windscreen wiper device having at least one wiper blade adapter (32a; 32b), having at least one wiper arm adapter (30a; 30b) and having at least one electric connecting unit (38a; 38b) for electrically connecting at least one line element (34a; 34b) of the wiper arm adapter (30a; 30b) to at least one electric attachment element (40a; 40b) of the wiper blade adapter (32a; 32b), wherein the wiper blade adapter (32a; 32b) is mounted movably, in particular pivotably, on the wiper arm adapter (30a; 30b) via at least one bearing element (36a; 36b), in particular a bearing bolt, of the wiper arm adapter (30a; 30b), **wherein** the electric connecting unit (38a; 38b) comprises at least one electric connecting element (42a; 42b) which is arranged on the wiper arm adapter (30a; 30b) and is mounted via the bearing element (36a; 36b) so as to be movable, in particular rotatable or pivotable, at least relative to the wiper arm adapter (30a; 30b), **characterized in that** the electric connecting unit (38a; 38b) comprises at least one coupling element (62a; 62b) which is arranged, in particular directly, on the bearing element (36a; 36b) and the electric connecting element (42a; 42b) and delimits at least one bearing recess (64a; 64b), wherein at least the electric connecting element (42a; 42b) and the coupling element (62a; 62b) are mounted on the bearing element (36a; 36b) via the bearing recess (64a; 64b) so as to be movable, in particular rotatable or pivotable, relative to the wiper arm adapter (30a; 30b).

2. Windscreen wiper device according to Claim 1, **characterized in that** the wiper arm adapter (30a; 30b) at least partially surrounds the coupling element (62a; 62b) at least in a region (74a; 74b) of the coupling element (62a; 62b), in which region the coupling element (62a; 62b) delimits the bearing recess (64a; 64b) and is arranged on the bearing element (36a; 36b).

3. Windscreen wiper device according to Claim 2, **characterized in that** the electric connecting unit (38a; 38b) has at least one stop element (78a; 78b) which is arranged on the electric connecting element (42a; 42b) and, in at least one connected state of the electric connecting unit (38a; 38b), lies, in particular directly, on the wiper arm adapter (30a; 30b), wherein the stop element (78a; 78b) is provided to secure the electric connecting element (42a; 42b) against a movement relative to the wiper arm adapter (30a; 30b) in at least one direction (80a) oriented along a bearing axis (48a; 48b) of the bearing element (36a; 36b).

4. Windscreen wiper device according to any one of the preceding claims, **characterized in that,** in at least one connected state of the electric connecting unit (38a; 38b), the electric connecting element (42a; 42b) and the electric attachment element (40a; 40b) are connected to each other for conjoint rotation with respect to a movement of the wiper blade adapter (32a; 32b) relative to the wiper arm adapter (30a; 30b), wherein the electric connecting unit (38a; 38b) is rotatable or pivotable together with the wiper blade adapter (32a; 32b) about the bearing element (36a; 36b).

5. Windscreen wiper device according to any one of the preceding claims, **characterized in that** the electric connecting unit (38a; 38b) comprises at least one sealing element (102a) which is provided in order, in at least one connected state of the electric connecting unit (38a; 38b), to close at least one electrical contact of the electric connecting element (42a; 42b) and/or of the electric attachment element (40a; 40b) in an air-tight and/or waterproof manner.

## Revendications

1. Dispositif d'essuie-glace comprenant au moins un adaptateur (32a ; 32b) de balai d'essuie-glace, au moins un adaptateur (30a ; 30b) de bras d'essuie-glace et au moins une unité (38a ; 38b) de connexion électrique pour connecter électriquement au moins un élément de câble (34a ; 34b) de l'adaptateur (30a ; 30b) de bras d'essuie-glace avec au moins un élément de raccordement électrique (40a ; 40b) de l'adaptateur (32a ; 32b) de balai d'essuie-glace, l'adaptateur (32a ; 32b) de balai d'essuie-glace étant monté de manière mobile, en particulier pivotante, sur l'adaptateur (30a ; 30b) de bras d'essuie-glace par l'intermédiaire d'au moins un élément (36a ; 36b) formant palier, en particulier un boulon de palier, de l'adaptateur (30a ; 30b) de bras d'essuie-glace est montée de manière mobile, en particulier pivotante, sur l'adaptateur (30a ; 30b) de bras d'essuie-glace, l'unité (38a ; 38b) de connexion électrique comprenant au moins un élément (42a ; 42b) de connexion électrique qui est agencé sur l'adaptateur (30a ; 30b) de bras d'essuie-glace et qui est monté de manière mobile, en particulier rotative ou pivotante, par l'intermédiaire de l'élément (36a ; 36b) formant palier au moins par rapport à l'adaptateur (30a ; 30b) de bras d'essuie-glace, **caractérisée en ce que** l'unité (38a ; 38b) de connexion électrique comprend au moins un élément de liaison (62a ; 62b) qui est agencé, en particulier directement, sur l'élément (36a ; 36b) formant palier et sur l'élément (42a ; 42b) de connexion électrique, et qui délimite au moins un évidement de palier (64a ; 64b), au moins l'élément (42a ; 42b) de connexion électrique et l'élément de liaison (62a ; 62b) étant déplaçables, en particulier étant aptes à tourner ou à pivoter, par rapport à l'adaptateur (30a ; 30b) de bras d'essuie-glace, via l'évidement de palier (64a ; 64b), par rapport à l'adaptateur (30a ; 30b) de bras d'essuie-glace sur l'élément (36a ; 36b) formant palier.

2. Dispositif d'essuie-glace selon la revendication 1, **caractérisé en ce que** l'adaptateur (30a ; 30b) de bras d'essuie-glace entoure au moins partiellement l'élément de liaison (62a ; 62b) au moins dans une zone (74a ; 74b) de l'élément de liaison (62a ; 62b) dans laquelle l'élément de liaison (62a ; 62b) délimite l'évidement de palier (64a ; 64b) et est agencé sur l'élément (36a ; 36b) formant palier.

3. Dispositif d'essuie-glace selon la revendication 2, **caractérisé en ce que** l'unité (38a ; 38b) de connexion électrique comprend au moins un élément de butée (78a ; 78b) qui est agencé sur l'élément (42a ; 42b) de connexion électrique et qui s'appuie, en particulier directement, contre l'adaptateur (30a ; 30b) de bras d'essuie-glace dans au moins un état connecté de l'unité (38a ; 38b) de connexion électrique, l'élément de butée (78a ; 78b) étant prévu de manière à empêcher tout mouvement de l'élément (42a ; 42b) de connexion électrique dans au moins une direction (80a) orientée le long d'un axe de palier (48a ; 48b) de l'élément (36a ; 36b) formant palier par rapport à l'adaptateur (30a ; 30b) de bras d'essuie-glace.

4. Dispositif d'essuie-glace selon l'une des revendications précédentes, **caractérisé en ce que** l'élément (42a ; 42b) de connexion électrique et l'élément (40a ; 40b) de raccordement électrique sont, dans au moins un état connecté de l'unité (38a ; 38b) de connexion électrique, reliés entre eux de manière solidaire en rotation à l'égard à un mouvement de l'adaptateur (32a ; 32b) de balai d'essuie-glace par rapport à l'adaptateur (30a ; 30b) de bras d'essuie-glace, l'unité (38a ; 38b) de connexion électrique étant rotative ou pivotante avec l'adaptateur (32a ; 32b) de balai d'essuie-glace autour de l'élément (36a ; 36b) formant palier.

5. Dispositif d'essuie-glace selon l'une des revendications précédentes, **caractérisé en ce que** l'unité (38a ; 38b) de connexion électrique comprend au moins un élément d'étanchéité (102a) qui est prévu pour enfermer de manière étanche à l'air et/ou à l'eau au moins un contact électrique de l'élément (42a ; 42b) de connexion électrique et/ou de l'élément (40a ; 40b) de raccordement électrique (dans au moins un état connecté de l'unité (38a ; 38b) de connexion électrique.
